Europäisches Patentamt

(19) European Patent Office

Office européen des brevets

(11) Publication number : **0 505 074 A1**

(12) **EUROPEAN PATENT APPLICATION**

(21) Application number : 92302022.6

(22) Date of filing : 10.03.92

(51) Int. Cl.⁵ : **G05D 27/02, H02J 4/00, H02J 13/00, G05B 13/00**

(30) Priority : **14.03.91 JP 49455/91**

(43) Date of publication of application :
**23.09.92 Bulletin 92/39**

(84) Designated Contracting States :
**DE FR GB**

(71) Applicant : **HITACHI, LTD.**
**6, Kanda Surugadai 4-chome**
**Chiyoda-ku, Tokyo 101 (JP)**

(72) Inventor : **Saito, Eiji**
**Yuhou-ryo 51, 20-3 Ayukawa-cho 6-chome**
**Hitachi-shi, Ibaraki 316 (JP)**
Inventor : **Sakurai, Shigeo**
**302-6-2 Nishinarusawa-cho 1-chome**
**Hitachi-shi, Ibaraki 316 (JP)**
Inventor : **Koyama, Kazuhito**
**13-13 Nishinarusawa-cho 1-chome**
**Hitachi-shi, Ibaraki 316 (JP)**
Inventor : **Shiina, Koji**
**302 1-29 Shiraume 3-chome**
**Mito-shi, Ibaraki 310 (JP)**

(74) Representative : **Calderbank, Thomas Roger et**
**al**
**MEWBURN ELLIS 2 Cursitor Street**
**London EC4A 1BQ (GB)**

(54) **Energy demand supply system.**

(57)    In accordance with the present invention, a means for information exchange between suppliable energy information from a plurality of energy supply facilities and energy demand information from energy utilizing apparatus and a means for selecting above described information are installed between the energy supply facilities and the energy utilizing apparatus, selecting the suppliable energy supply facilities which correspond to the energy demand information and are most effective by the means for selecting the information, and energy is provided to the energy utilizing apparatus from the selected energy supply facilities.

    Users utilizing energy are cheaply provided with the energy which is consumed by the energy utilizing apparatus, and consuming efficiency of energy is increased.

EP 0 505 074 A1

The present invention relates to a system composed by consolidation of a means for energy supply and energy utilization apparatus which are aimed at, for example, urbanization plans made by public enterprise organizations, power distribution line and its control system settled by power supply organizations, or gas and water supply line and their control systems, and control systems for power distribution in intelligent buildings furnished with cogeneration system or in ordinary houses.

An intelligent building furnished with a cogeneration system is an example of a conventional system which consolidated a means for energy supply and usage of energy utilizing apparatus.

The building is so designed with previous calculation of consuming heat which is demanded by users that the cogeneration system in the building operates in accordance with variation of demand for electric power and heat in order to satisfy necessary power supply for living and working of people and much heat as possible for using by air conditioning apparatus and hot water supply facilities.

That means, when designing of the building, heat demand by the users who live or work in the building is previously investigated by estimating seasonal or hourly heat consumption, for example, restricted to hot water supply or air conditioning.Besides, power utilization for electrical general home appliances used by users, and for office automation apparatus and lightings installed in the building, etc. is also previously investigated by estimating seasonal or hourly consumption. After finishing the demand investigation in a certain degree, specification of the cogeneration system is so determined that the system is able to be operated in accordance with the demand, and that the system is operated so as to overcome economical and environmental problems and to make the energy consuming efficiency high.

Simultaneously, the place in the thermal cycle of the cogeneration system from where the heat supply lines are furnished is determined, and heat capacity, temperature, and continuing period of thermal energy brought by each supply lines to places where the users are finally able to use the energy are determined. The determined amount of the heat supply is continuously controlled by a centralized control operation system for regulating the amount of the heat supply, and the previously determined thermal energy is supplied to the users.

Besides, in regard to power supply, specification on voltage value, current value, alternating current, etc. of electric energy conducted from the generator installed place in the cogeneration system to places where users are finally able to use the power are determined. The determined amount of the power supply is continuously controlled by a centralized control operation system for regulating the amount of the supply, and the previously determined power is supplied to the users. But, in regard to the power supply, power supply lines (transmission lines) for receiving necessary power for making up deficient power from electric power companies which commercially supply power to the public are provided to the building when total consuming capacity of the power in the building is larger than the generating capacity of the cogeneration system in the building. On the contrary, when the power generated by the cogeneration system in the building is larger than the necessary consuming capacity in the building, there may be a case when the power is sold to electric power companies which commercially supply power to the public.

Further, power capacity which is usable by the user is restricted by breakers installed at each floor or each room of the building, and when power is used over the allowable range of the breaker by the user, the breaker opens and the use of power by the user is temporarily stopped, and the centralized control operation system for controlling the power supply works so as to restrict excessive supply of power.

The above described conventional method has following problems.

That means, when the users who live or work in the building desire to use power or heat more than the suppliable amount by the cogeneration system in the building, changing of settled values in software used in the centralized control operation system for regulating the supply, re-examination of the supply line connecting the energy generating site and the using site, and setting change of the breaker for restriction of usable power capacity by the users are necessary because the supply of power and heat are performed within a designed allowable supply range which was previously designed before construction of the building.

Otherwise, additional installation of new supply line which is an entirely different supplying means from the supply line for heat or power previously installed in the building in order to increase remarkably the supplying capacity.

Further, the users who live or work in the building are restricted in quality of energy supply to the power or the heat generated by the energy supply facility. For example, a case when only power is used is explained hereinafter.

When electric general home appliances are used as the energy utilizing apparatus, the electrical appliance obtains power through an outlet. But, the current obtainable through the outlet is restricted as a designated value, for example, such as 15A-125V of alternating current, and if an electric appliance has to be operated with direct current, it becomes necessary to install an AC/DC convertor at the appliance or between an outlet and the electric cord of the appliance.

In the above described manner, the conventional method was unable to correspond to optional demand of the users because the control for the supply from the energy supply facility was rigidly fixed.

The present invention seeks to provide an energy demand supply system which is able to perform flexible control of a supply system in an energy supply facility and corresponds to many various demand desired by users.

The gist of the present invention is to provide an energy demand supply system comprising an energy supply facility and energy utilizing apparatus, which is furnished with a means for exchange energy supply information from the energy supply facility and energy demand information from the energy utilizing apparatus and a means for selecting the information, and demands and supplies energy depending on signals from the information selecting means.

Further the present invention may also involve an energy demand supply system comprising an energy supply facility and energy utilizing apparatus, which supplies energy balanced with the energy demand by fast selection of matching of energy supply information with energy demand information by a means for exchange the energy supply information from the energy supply facility and the energy demand information from the energy utilizing apparatus and a means for selecting the information.

In this way, the present invention may provide an energy demand supply system which is able to supply energy consumed by energy utilizing apparatus cheaply for customers who utilize the energy.

Further, the present invention may also provide an energy demand supply system which is able to improve energy consuming efficiency without imposing burdens to energy supply facilities.

The energy information may include kinds of energy, quality of energy, quantity of energy, using period of energy and its degree, and efficiency of energy generation sources.

With the present invention, an information network may be integrated with a plurality of energy supply facilities, a plurality of energy utilizing apparatus, a means for exchanging each information relating to energy (information on demand and supply), and a means for selecting the information so as to realize an overall high energy consuming efficiency in a whole energy demand supply system which is connected to the information network. By having the above described arrangement for the energy supply facilities and the energy utilizing apparatus, flexible regulation of a supply system having wide freedom in the energy supply facilities becomes possible, and an energy demand supply system corresponding to many different demands required by users such as quantity of energy, quality of energy, demanding time, and cost etc. can be provided to the users of the energy utilizing apparatus. Information can be selected from both the supply side and the demand side so as to permit an overall high energy consuming efficiency. In other words, the means for selecting the information selects information not only for selecting matched demand and supply but also for selecting optimum combination of demand and supply.

In accordance with the energy demand supply system composed in the above described manner, such information as not only energy capacity being used by an energy utilizing apparatus but also kinds, quality, quantity, and using period and degree of energy relating to the utilization of the energy are taken into an energy selecting means as demand information relating to the energy utilizing apparatus by a means for exchange energy information. Besides information relating to the energy supply facility such as kind, degree of quality, quantity, efficiency, and supply period of available energy are taken into the energy selecting means by the means for exchange energy information.

When the energy demand supply system of the present invention comprising a means for exchange energy information and energy supply line is composed including at least two independent energy supply facilities and a several energy utilizing apparatus, selection of much information relating to energy becomes possible. Moreover, energy cost can be reduced because previous releasing energy or excessive energy can be used with a preferable consuming efficiency.

**In the drawings:**

FIG. 1 is a schematic illustration indicating the system in the first embodiment of the present invention.

FIG. 2 is a schematic illustration indicating the system in the second embodiment of the present invention.

FIG. 3 is a schematic illustration indicating the system in the third embodiment of the present invention.

FIG. 4 is a schematic illustration indicating the lines for information exchange in the embodiments of the present invention.

FIG. 5 is a schematic illustration for explanation on the memories to store energy information in the embodiments of the present invention.

FIG. 6 is a schematic illustration for explanation on the method for selecting energy information in the embodiments of the present invention.

FIG. 7 is a schematic illustration for explanation on the method for receiving information relating to the energy utilizing apparatus and energy supply in the embodiments of the present invention.

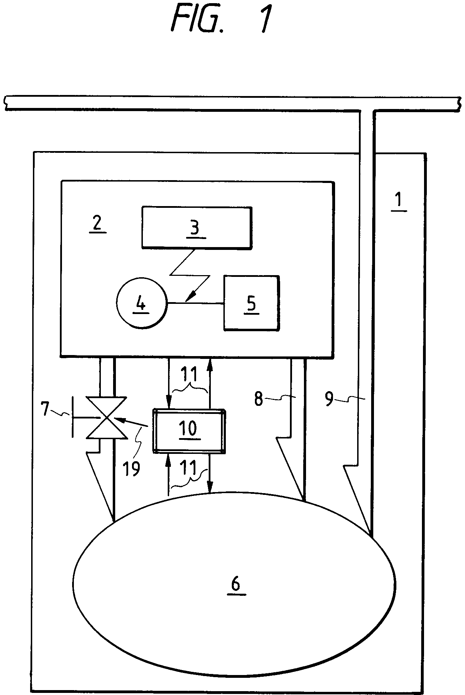

Hereinafter, one of the embodiments of the present invention is explained in detail referring to FIGs. 1 and 4-7.

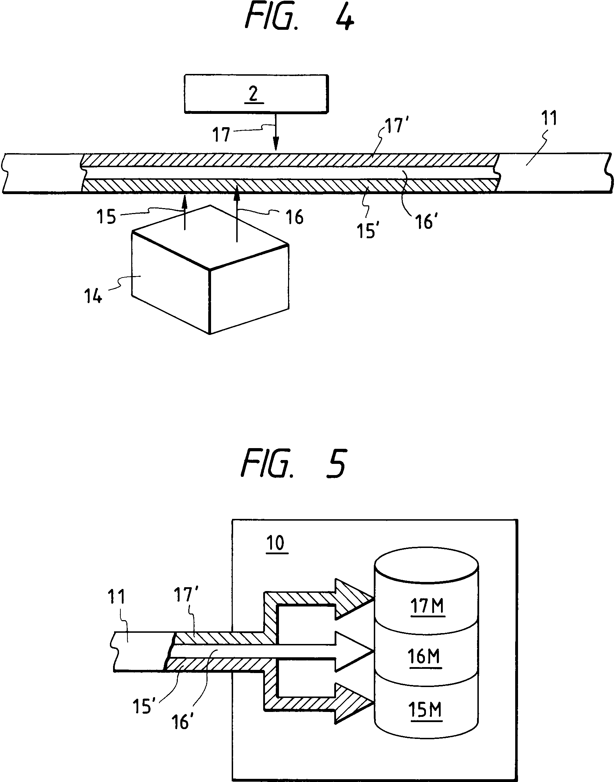

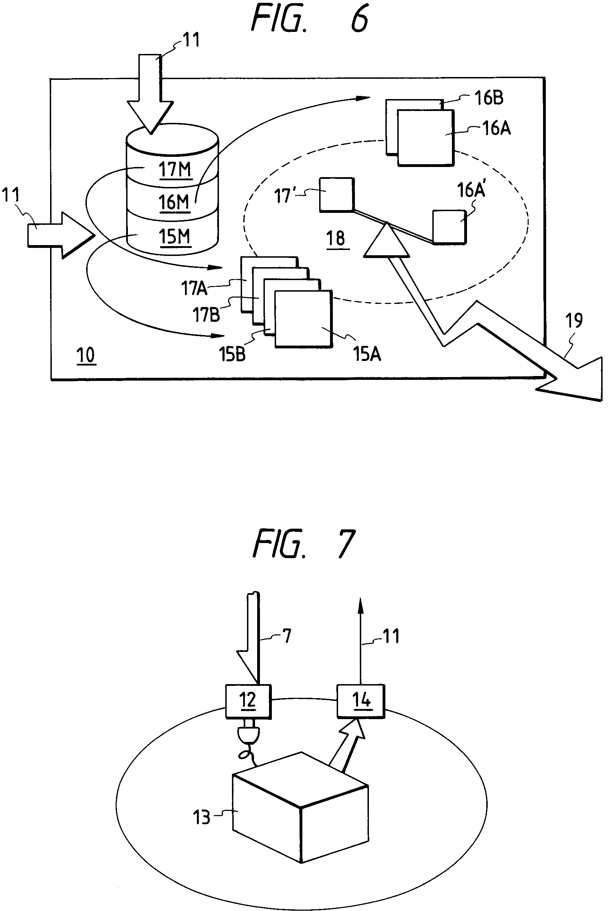

FIG. 1 is a schematic illustration of total composition of an intelligent building which adopts the present invention for indication of energy flow and information flow in the building, and FIG.4 is a schematic illustration of a line cable for the information exchange. FIG. 5 is a schematic illustration indicating information exchange between an apparatus for selecting energy information and a line for information exchange, FIG. 6 is a schematic illustration indicating selecting method in the energy information selecting place, FIG. 7 is a schematic illustration of the composition indicating the place where the energy utilizing apparatus transmits demand information to the exchange line and the place receiving the energy supply.

FIG. 1 of the first embodiment, the numeral 1 is the intelligent building, 2 is the cogeneration system, 6 is the office room for the users using the energy utilizing apparatus, and 10 is the apparatus having the means for selecting energy. In the cogeneration system 2, the heat supply source 4 such as a super heating boiler, the electric power generating apparatus 5 represented by a generator, and the centralized control operation system 3 for operation of the system and control of the supply line are included. And the numeral 7 is the supply line of heat energy from the cogeneration system 2 to the office room 6, and the numeral 8 is the supply line of electric power. The numeral 9 is the line for electric power which is supplied from other power supply companies outside the intelligent building. Further, the numeral 11 is the line for energy information exchange.

In FIG. 4, the numeral 14 is the apparatus for reading information on the demand and quantity of state etc. relating to the energy utilizing apparatus and for transmitting the information to the information line, 15 is the flow of the information indicating the state of the energy utilizing apparatus, 16 is the flow of the information relating to the demand of the energy utilizing apparatus, and 17 is the flow of the information relating to the supply from the cogeneration system 2. Besides, the internal composition of the line 11 for the information exchange comprises the line 15' for transmitting the information indicating the state of the energy utilizing apparatus, the information line 16' for demand of the energy utilizing apparatus, and the line 17' of the information relating to the supply of the cogeneration system.

In FIG. 5, the numeral 15M is the memory storing the information indicating the state of the energy utilizing apparatus , 16M is the memory storing the information on the demand of the energy utilizing apparatus, and 17M is the memory storing the information relating to the supply from the cogeneration system.

In FIG. 6, the numeral 18 is a schematic illustration indicating the state of execution of the software which is included in the apparatus 10 for selecting the information, 19 is the signal for transmitting the decision by the software to the energy supply facility.

In FIG. 7, the numeral 12 is the outlet, 13 is the energy utilizing apparatus, and 14 is the apparatus for reading the information on the demand and the quantity of state etc. relating to the energy utilizing apparatus and for transmitting the information to the information selecting apparatus. The numeral 7 is the line for electric power supply from the cogeneration system installed in the building, and 11 is the line for information exchange. In order to make the explanation simple, the energy utilizing apparatus 13 is assumed to be a general home appliance in the following case.

First, when an user turns on the switch of the home appliance 13, the apparatus 14 for reading the demand and the quantity of state of the home appliance starts operation concurrently, and starts to read the information on the demand relating to the apparatus which have been previously recorded at the home appliance side.

The operation of the apparatus 14 can be started by the switch 13 of the home appliance, and hence, the apparatus 14 is not necessarily operated continuously. And the apparatus 14 is preferably capable to start its own operation fast for exchanging information by being furnished with such a member as a battery which is capable of storing energy such as electric power even if there might be any trouble in the energy supply facility to which the apparatus 14 is connected for operation.

The initially settled information on the demand such as, for example, "the kinds of the energy is electric power, the desired quality and the quantity are 9V-2A of direct current, using period is indefinite, degree of the usage is that the fluctuation of the current is allowable if at least 50 % of the designated current is supplied continuously on the assumption that the supply of the minimum current is not failed entirely. The fluctuation of the degree is informed depending on elapsing time as a new information" is read by the apparatus 14, and is transmitted by the line 11 for the information exchange to the apparatus having a means for selecting the information.

On the other hand, the energy supply side shown in FIG. 1 is the cogeneration system 2 furnished with a multi-functional electric source, and the information relating to the supply such as, for example, "the kind of suppliable energy are both heat and electric power, the quality and the quantity of the electric power are both 100V-25A of alternating current and 9V-2A of direct current, and the stable supply of the electric power is possible at the present" is transmitted from the cogeneration system 2 to the apparatus having a means for selecting the energy information 10 through the line for the information exchange.

Now, referring to FIG. 4, the line for information exchange is explained in detail.

The line 11 for information exchange has three separate cables inside, and each of the lines is respectively used as the line 15' transmitting the information indicating the state of the energy utilizing apparatus, the line 16' of the information on demand of the energy utilizing apparatus, and the line 17' of the information on the supply from the cogeneration system. Here, the information indicating the state of the energy utilizing apparatus which is transmitted by the line 15' is the information on the concurrent releasing energy from the energy utilizing apparatus with consuming the designated amount of energy by the energy utilizing apparatus, and on the excessive energy released by the energy utilizing apparatus in operation,etc. and information on all of the above described energy are made even their capacity may be very small. And, the information indicating the state of the energy utilizing apparatus is handled by the means for selecting energy as same as the information on the supply to the information on the demand.

As above described, the flow of the information is restricted to one direction owing to the separation of the line in the above described manner and, therefore, quick exchange of the information from the energy utilizing apparatus and the energy supply facility becomes possible, and it is also effective for sorting out of many various information at the apparatus furnished with a means for selecting information.

Next, function of the apparatus 10 furnished with the means for selecting energy is explained referring to FIGs. 5 and 6.

Referring to FIG. 5, the apparatus 10 furnished with the means for selecting energy has memories to store each informed values for respective three information lines 15', 16', and 17', and each of the memories 15M, 16M, and 17M stores informed values transmitted from the information exchange line 11 by transferring of the information until the informed values are renewed or the information are consumed by finishing of the energy use. Accordingly, the informed values stay as data which are available for comparison by the means for selecting energy until the values are changed. In the above described case, as the energy information exchange line 11 operates only at the time when new information is obtained, such problems as occupation of the information line by a plenty of fixed information which cause disturbance for new information exchange or delay in transmitting of the information can be avoided.

Moreover, referring to FIG. 6, the apparatus 10 furnished with a means for selecting energy is provided with a software which is able to send control signals to the energy supply facility by comparison of the stored data in the memories.

The operation procedure of the software is explained in more detail. Among each of the informed values, when information requiring new demand is stored in the memory 16M in FIG. 6, the informed value for new demand is taken to a step to compare with informed values indicating state of the energy utilizing apparatus which are stored in the memory 15M, and also with informed values relating to the energy supply of the cogeneration system which are stored in the memory 17M. (Hereinafter, the informed values stored in the memories 15M and 17M are simply called the informed values relating to energy supply). In the step of comparison, if there is an informed value relating to energy supply which is correspondent with the informed value for new demand, the step to compare the informed values is stopped immediately and a signal to operate variable valves for regulating quantity of energy, which are installed in the energy supply lines separately depending on kind and quality of energy, is supplied from the apparatus furnished with the means for selecting energy. Simultaneously, the informed value of the new demand, which is stored in the memory 16M, is cleared off. On the other hand, if any informed value corresponding with the new demand is not found, the step of comparison is performed repeatedly until an information relating to the energy supply corresponds to the new demand.

In the step of comparison, if any informed value corresponding with the new demand is not readily found, a signal to inform the difficult state in finding corresponding informed value is preferably sent to the user. Further, in the step of comparison, when an informed value for new demand is stored in the memory 16M, subsequent parallel operation to perform the step of new comparison is preferably possible without stopping the previously proceeding step of comparison. When an informed value for new demand does not exist in the memory 16M, the software being used for the means of selecting energy may stop the process operation until the informed value is stored, that is, until the information on new demand is transmitted.

Besides, by giving an unique address in memories to each of the new informed values being stored in the memories 15M and 16M,it makes possible that priority order of the informed values relating to the supply is decided based on the ordinary data of the informed values for demand which are ordinarily recorded depending on the frequency of the demand using the addresses as flags in the step of comparison by the software for selecting energy and the informed value from the supply side is provided using the addresses as marks. In accordance with the means, there is an advantage that a supply value of energy for a new demand is readily detectable. In the above described case, the data recorded with the order of the informed values for demand having high frequent requirement preferably have a study function to be rewritten whenever new energy is selected.

As previously explained, whenever selection of the information relating to the demand for the energy utilizing apparatus is performed, a designated energy corresponding to the energy utilizing apparatus is supplied to the energy utilizing apparatus through the energy supplying line.

Accordingly, the users are able to obtain the needed energy corresponding to the energy utilizing apparatus through the energy supplying line without special selection of the information on the energy. That means, an energy demand supply system having flexible energy control can be provided.

For example, whatever energy utilizing apparatus using electric power, such as a word processor which uses direct current, a lighting apparatus which uses alternating current, and an apparatus which uses 200 V as a refrigerator for business, may be able to use a needed current from the same outlet, and an AC/DC convertor is not necessary. There is an advantage that any devices to increase voltage and any reexamination of control system for electric network are not necessary. Although electric power is taken as energy in the above described explanation, same advantage is obtainable in the exchange of the information for demand and supply of energy relating to heat by using same method as the exchange of the information on electric power.

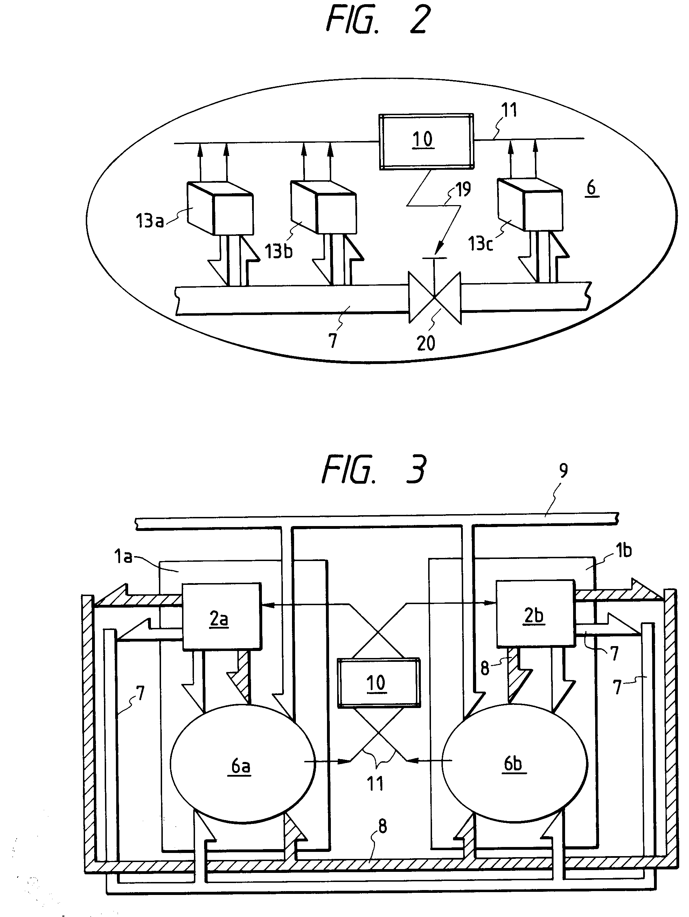

Next, the second embodiment of the present invention is explained referring to FIG. 2.

FIG. 2 is a schematic illustration of exchanging both energy information and energy in a living room where energy utilizing apparatus are installed. Referring to FIG. 2, the numeral 6 is the living room space, 7 is the line for energy exchange between the energy utilizing apparatus, 10 is the apparatus furnished with a means for selecting energy, 11 is the line for exchanging energy information, each of 13a, 13b, and 13c is each energy utilizing apparatus, 19 is the signal for transmitting a result determined by a software being furnished to the apparatus for selecting energy to an energy supply facility, and 20 is the variable valve for regulating the quantity of energy supply which is operated by receiving the signal. Here, for simplifying of the explanation, the energy utilizing apparatus expressed by 13a-13c are taken as heat handling apparatus, and it is assumed that 13a is a hot water supply facility, 13b is an air conditioner, and 13c is a refrigerator for business.

Here, as for the line 11 for exchanging energy information, although a line for the information indicating the state of the energy utilizing apparatus and a line for the information for demand of the energy utilizing apparatus as previously explained are indispensable, a line for the information relating to supply of the cogeneration system is not necessarily indispensable. The apparatus 10 furnished with the means for selecting energy does not necessarily store the information relating to the supply of the cogeneration system in its memories. Other functions are as same as that of the first embodiment of the present invention, and with the above described composition, exchanging of excessive energy and releasing energy between each of the energy utilizing apparatus becomes possible, and existing of operable heat utilizing apparatus without supplying of heat energy from the cogeneration system becomes sufficiently possible. That is, the refrigerator for business 13c is an endothermic refrigerator, and when the refrigerator in refrigerating inside continuously releases heat for obtaining sufficient temperature by the hot water supply facility 13a, the hot water supply facility 13a can be operated without specially being supplied heat energy from the heat supply facility by being supplied the releasing heat energy from the refrigerator 13c. Also, the releasing heat can be utilized as energy for the air conditioner 13b to warm the living room. At the above described case, although the releasing energy from the refrigerator 13c does not necessarily satisfy the demand of the air conditioner 13b completely, the releasing energy is able to support a part of heat energy being utilized by the air conditioner 13b if some degree of heat capacity such as higher temperature than outside atmosphere is satisfied.

According to the above described case, there is an advantage that cost for energy generation of the energy supply facility can be reduced and users are able to obtain cheap energy for the demand. Although the above described embodiment is on the utilization of heat energy, same effect is obtainable in the utilization of electric power by applying same method as the embodiment.

Next, the third embodiment of the present invention is explained referring to FIG.3.

FIG. 3 is a schematic illustration of an example in which the present invention is applied to two intelligent buildings between. Referring to FIG. 3, the numerals 1a and 1b indicate each of the buildings and, hereinafter, the sub-index letter attached at side of the numeral indicates being installed at each of the buildings, and the numerals in FIG. 3 indicates entirely same place and same apparatus as those shown in FIG. 1.

When the apparatus 10 having a means for selecting energy exists between the two intelligent buildings 1a and 1b, quantity of information is increased remarkably in compared with a case when energy selection is performed in only an intelligent building and, consequently, there is an advantage to be able to correspond to much needed demand. Further, there is a possibility that energy, which is released without being used in an conventional on-site system having closed control in a building, will be an effective heat supply source to the adjacent intelligent building, and such advantages as increment of energy consuming efficiency, and consequent saving energy will be brought.

As previously described, in accordance with the present invention, exchange of information relating to energy, flexible control having large degree of freedom of supply systems in energy supply facilities, and correspondence to many various demand required by users become possible.

Further, energy utilizing users are able to be supplied cheaply with energy being consumed by energy utilizing apparatus.Moreover, consuming efficiency of energy is increased without imposing burdens to the energy supply facilities.

## Claims

1. An energy demand supply system comprising a plurality of energy supply facilities and energy utilizing apparatus, characterised in having

   a means for information exchange between suppliable energy information from said energy supply facilities and energy demand information from said energy utilizing apparatus, and a means for selecting said suppliable energy information which corresponds to said energy demand information, whereby,

   said energy supply facility, selected on the basis of said suppliable energy information which corresponds to said energy demand information is arranged to provide energy to said energy utilizing apparatus.

2. An energy demand supply system as claimed in claim 1, wherein said energy utilizing apparatus is plural.

3. An energy demand supply system comprising

   a plurality of energy supply facilities and a plurality of energy utilizing apparatus, characterised in

   having a means for information exchange among suppliable energy information from said energy supply facilities,

   energy demand information from said energy utilizing apparatus, and releasing energy information and excessive energy information from said energy utilizing apparatus, and

   a means for selecting said information, and that

   selecting said suppliable energy information which corresponds to said energy demand information by said means for selecting said information, and

   making said selected energy supply facility provide energy to said energy utilizing apparatus.

4. An energy demand supply system as claimed in claim 3, wherein said energy information includes kinds of energy, quality of energy, quantity of energy, and using period and degree of energy.

5. An energy demand supply system as claimed in claim 3, wherein an exclusive energy information transmitting line is provided as a means for exchange each energy information.

6. An energy demand supply system as claimed in claim 3, wherein a memory apparatus for storing said each energy information is provided, and the information stored in said memory apparatus is replaced with new information supplied from said means for exchange energy information.

7. An energy demand supply system as claimed in claim 3, wherein said memory apparatus has addresses, and said means for selecting energy information operates with priority in accordance with the addresses.

8. An energy demand supply system comprising

   a plurality of energy supply facilities and a plurality of energy utilizing apparatus, characterized in having

   a means for information exchange between suppliable energy information from said energy supply facilities and said energy demand information from said energy utilizing apparatus, and

   a means for selecting said information, and that

   selecting said suppliable energy supply facility which corresponds to said energy demand information and is most effective by said means for selecting said information, and

   making said selected energy supply facility provide energy to said energy utilizing apparatus.

9. An energy demand supply system comprising a plurality of energy utilizing apparatus,

   characterized in having

   a means for information exchange between energy demand information from said plurality of energy utilizing apparatus, releasing energy information, and excessive energy information from said energy utilizing apparatus, and

   a means for selecting said information, and that

   selecting said releasing energy information or said excessive energy information which corresponds to said energy demand information as energy supply apparatus information, and

   making said selected energy supply apparatus provide energy to said energy utilizing apparatus.

10. An energy demand supply system as claimed in claim 9, wherein said energy information includes kinds of energy, quality of energy, quantity of energy, and using period and degree of energy.

11. An energy demand supply system as claimed in claim 9, wherein an exclusive energy information transmitting line is provided as a means for exchange each energy information.

12. An energy demand supply system as claimed in claim 9, wherein a memory apparatus for storing said each energy information is provided, and the information stored in said memory apparatus is replaced with new information supplied from said means for exchange energy information.

13. An energy demand supply system as claimed in claim 12, wherein said memory apparatus has addresses, and said means for selecting energy information operates with priority in accordance with the addresses.

# FIG. 1

# FIG. 2

# FIG. 3

# FIG. 4

# FIG. 5

## FIG. 6

## FIG. 7

EP 0 505 074 A1

# EUROPEAN SEARCH REPORT

European Patent Office

Application Number

| DOCUMENTS CONSIDERED TO BE RELEVANT | EP 92302022.6 |
|---|---|

| Category | Citation of document with indication, where appropriate, of relevant passages | Relevant to claim | CLASSIFICATION OF THE APPLICATION (Int. Cl. 5) |
|---|---|---|---|
| A | DE - A - 3 329 507 (WESTINGHOUSE) * Abstract; page 9, line 14 - page 10, line 29; claims 1,2,4,7,8 * -- | 1,3,4, 5,6,8, 12 | G 05 D 27/02 H 02 J 4/00 H 02 J 13/00 G 05 B 13/00 |
| A | US - A - 4 090 088 (MC MARON et al.) * Abstract; column 3, lines 14-24; claims 1,9,13,16 * -- | 1,3,7, 8 | |
| A | DE - A - 2 537 655 (SAVCO) * Page 1, lines 1-8; claims 1,2,3,9 * -- | 1,2,3, 5,15 | |
| A | EP - A - 0 268 697 (NIEDNER) * Column 2, line 34 - column 3, line 19; claims 6,7,8,11; fig. 1 * -- | 1,2,3, 5 | |
| A | GB - A - 2 056 201 (HONEY WELL) * Abstract; claims 1,3 * ---- | 1,7 | TECHNICAL FIELDS SEARCHED (Int. Cl.5) H 02 J G 05 D G 05 B |

The present search report has been drawn up for all claims

| Place of search | Date of completion of the search | Examiner |
|---|---|---|
| VIENNA | 22-06-1992 | MEHLMAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)